# EUROPEAN PATENT SPECIFICATION

(11) **EP 2 169 214 B1**
(45) Date of publication and mention of the grant of the patent: **03.04.2019**
(21) Application number: 08164995.6
(22) Date of filing: 24.09.2008
(51) Int. Cl.: F02N 15/02, F16F 15/31, F16F 15/133, F02N 11/00

(54) **Flywheel arrangement for an internal combustion engine**
Schwungradanordnung für einen Verbrennungsmotor
Agencement de volant d'inertie pour moteur à combustion interne

(43) Date of publication of application: 31.03.2010
(73) Proprietor: Volvo Car Corporation, 405 31 Göteborg (SE)
(72) Inventor: Gast, Peter, 423 55, Torslanda (SE); Forssell, Jonas, 423 63, Torslanda (SE); Stenvall, Lars, 459 91, Ljungskile (SE); Almhagen, Petter, 448 31, Floda (SE)
(74) Representative: Valea AB

(56) References cited:
- WO-A-2006/016668
- WO-A-2007/012946
- DE-A1- 10 005 001
- DE-A1-102007 029 353
- FR-A- 2 598 475
- US-A- 4 729 465
- US-A1- 2003 213 672

## Description

### TECHNICAL FIELD

The present invention is related to a flywheel arrangement for an internal combustion engine in accordance with the preamble of claim 1. Furthermore, the present invention relates to a method for reducing the level of torsional vibrations produced in a flywheel arrangement for an internal combustion engine during engine start-up in accordance with the preamble of claim 10.

### BACKGROUND OF THE INVENTION

It is known to use dual-mass flywheels having a pair of rotating masses which rotate freely relative to one another to a limited extent and are interconnected by a compliant member such as a spring damper system to lower the level of torsional vibrations generated by a firing internal combustion engine. The mass of the flywheel is split into a first mass and a second mass where the first mass is attached to the engine side of the damper system and the second mass is attached to a clutch/transmission side of the damper system. Dual-mass flywheels of this kind can improve overall vehicle driveability and increase the service life of various drive-train components. Drive-train vibrations are reduced by such dual-mass flywheels, which reduces rattling and droning noises, particularly at low engine speeds. The resultant smoother low-speed running allows comfortable driving at lower speeds, which helps reduce fuel consumption. The transmission is also easier to shift because of the low mass to be synchronized, and there is less synchronization wear.

A major problem with prior art dual-mass flywheels is that the natural frequencies of such systems are relatively low. This creates a problem when an engine is to be started in that the frequency of the torsional vibration excitation generated by the engine at some point in the engine start-up sequence, often below 400 rpm, matches the natural frequency of the dual-mass system causing high vibration levels and inhibiting the engine from reaching idle. When passing through a resonance frequency in the starting sequence of the engine there is the danger that the two flywheels move in opposite directions and only stop finally when reaching end positions e.g. as the springs of a torsional vibration damper become "solid", potentially causing damage to the flywheel assembly.

WO2007012946 discloses a startup torque transmitting mechanism of an internal combustion engine, which, by means of a one-way clutch, both transmits torque generated by a starter motor to a crankshaft side in one direction and prevents the transmission of torque in the other direction. A ring gear is in constant mesh with a pinion gear of a starter motor. Torque of the pinion gear is transmitted from the ring gear via a one-way clutch and thus rotates the crankshaft. The one-way clutch is provided separately from a flywheel and is not mounted to the crankshaft via the flywheel. As a result, impact noise produced when the one-way clutch engages is not directly transmitted to the flywheel. Accordingly, noise radiation from the flywheel can be suppressed, thereby enabling noise to be reduced.

US2003213672 discloses a variable inertia flywheel and clutch assembly having a primary flywheel mass rotationally fixed to an engine crankshaft and a secondary flywheel mass selectively engageable with a clutch disc, which is rotationally fixed to a transmission input shaft. A radial spring assembly is coupled between the primary mass and the secondary mass, as well as a latching assembly that can latch to selectively prevent relative rotation between the primary mass and the secondary mass. A set of gear teeth are located about the outer periphery of the secondary mass and can be engaged with a starter motor in order to start the vehicle engine. The secondary flywheel mass is latched to the primary mass when the engine is off such that the gear teeth on the secondary mass can be engaged by the starter motor to drive the crankshaft while starting the engine, just as with a conventional single mass flywheel assembly. Under all engine operating conditions, the torque from the crankshaft is passed directly to the primary mass. If the engine RPMs are below a predetermined level, then the spring force from the radially oriented springs will exceed the centrifugal force generated by the latching pins and plungers, forcing the latching pins to slide radially inward into their respective latching slots. The centrifugal latch mechanism is now in its latched position, preventing the secondary mass from rotating relative to the primary mass. When the centrifugal latch mechanism is in its latched position, the torque is transferred directly from the primary mass to the secondary mass, without the radial spring assemblies transferring any torque. Above the predetermined engine RPM level, the centrifugal force generated by the latching pins and plungers will exceed the spring force from the radially oriented springs. This will force the latching pins to slide radially outward out of their respective latching slots. The centrifugal latch mechanism is now in its unlatched position, allowing the secondary mass to rotate relative to the primary mass. The torque is now transferred from the primary mass to the secondary mass via the radial spring assemblies.

### SUMMARY OF THE INVENTION

An object of the present invention is to provide a flywheel arrangement for an internal combustion engine producing a reduced level of torsional vibration during engine start-up, where the arrangement comprises a starter motor having a pinion gear at an output shaft, which pinion gear is arranged in constant engagement with a corresponding crank gear of a crank wheel located between an engine block and a flywheel assembly of the engine, which crank wheel is operatively connected to a crankshaft of the engine via a one-way clutch unit.

According to a first aspect of the present invention this object is achieved in accordance with the characterizing portion of claim 1.

A further object of the present invention is to provide an improved method for reducing the level of torsional vibrations produced in a flywheel arrangement for an internal combustion engine during engine start-up where the arrangement comprises a starter motor having a pinion gear at an output shaft, which pinion gear is arranged in constant engagement with a corresponding crank gear of a crank wheel located between an engine block and a flywheel of the engine, which crank wheel is operatively connected to a crankshaft of the engine via a one-way clutch unit.

According to a second aspect of the present invention this object is achieved in accordance with the characterizing portion of claim 10.

Further embodiments are listed in the dependent claims.

It will be appreciated that features of the invention are susceptible to being combined in any combination without departing from the scope of the invention as defined by the accompany claims.

### BRIEF DESCRIPTION OF THE DRAWINGS

By way of example only, embodiments of the present invention will now be described with reference to the accompanying drawings wherein:

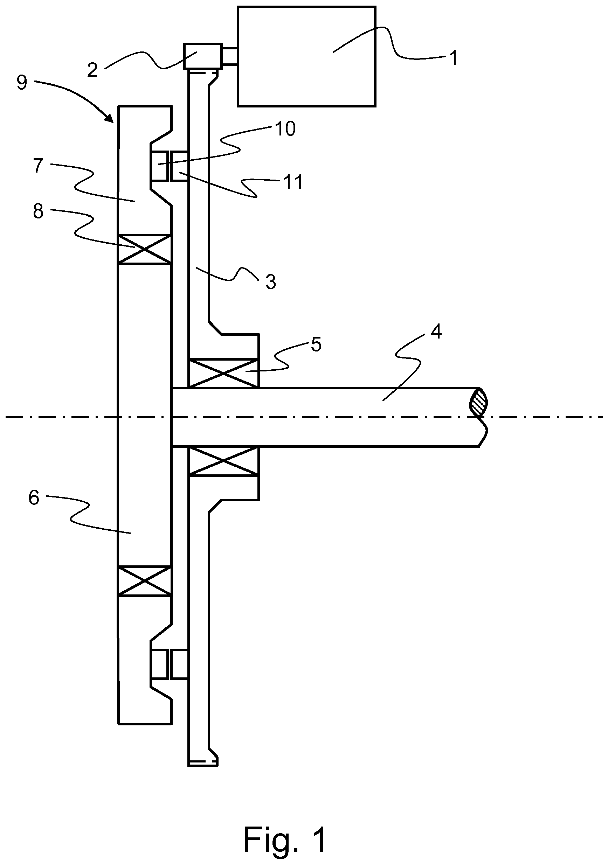

Figure 1 is a schematic view of a flywheel arrangement according to the present invention.

Still other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not necessarily drawn to scale and that, unless otherwise indicated, they are merely intended to conceptually illustrate the structures and procedures described herein. The same reference numerals will be used for illustrating corresponding features in the different drawings.

### DETAILED DESCRIPTION OF PREFERRED EMBODIMENTS

This invention is based on the realisation that it would be advantageous if the torsional natural frequency of a dual-mass flywheel system could be raised during engine start-up cranking and then lowered after engine start-up for more effective control of torsional vibration levels due to the engine firing in normal operation.

In a preferred first embodiment of the present invention, as shown schematically in figure 1, a starter arrangement comprises a starter motor 1, e.g. an electrical starter motor, having a pinion gear 2 at an output shaft. The pinion gear 2 is arranged in constant engagement, e.g. through always meshing, with a corresponding crank gear of a crank wheel 3. The crank wheel 3 is located between an engine block (not shown) and a flywheel assembly 9 of the engine.

The crank wheel 3 is operatively connected to a crankshaft 4 of the engine via a one-way clutch unit 5, and is suitably a ring gear that is arranged to rotate with the starter motor 1 and freewheel when the engine runs, thanks to the one-way clutch unit 5. As the starter motor 1 is permanently engaged to the ring gear the gear design may be refined and optimized for generating a minimum of noise during operation. In the centre of the crank wheel 3 is arranged the one-way clutch unit 5.

The dual-mass flywheel assembly 9 comprises a first flywheel body 6 adapted to be connected to the crankshaft 4 of the engine and rotate therewith. A second flywheel body 7 is arranged rotatable relative to the first flywheel body 6 and coupled thereto such that is able to move elastically through a limited angular distance relative to the first flywheel body 6. The elasticity is provided e.g. through the first and second flywheel bodies being interconnected by a compliant member (not shown) such as a spring damper system to lower the level of torsional vibrations generated by a firing internal combustion engine. The second flywheel body 7 is supported to be able to rotate via a bearing (not shown) with respect to the first flywheel body 6.

An interlocking device 8 includes one or more locking arrangements adapted to produce an interlocking connection between the second flywheel body 7 and the first flywheel body 6 during cranking of the internal combustion engine. Hereby the torsional natural frequency of the dual-mass flywheel assembly 9 is raised during engine start-up cranking such that the frequency of the torsional vibration excitation generated by the engine in the engine start-up sequence does not match the natural frequency of the dual-mass flywheel assembly 9.

The locking arrangement 8 is adapted to produce the interlocking connection between the second flywheel body 7 and the first flywheel body 6 when there is no relative rotational motion between the flywheel assembly 9 and the crank wheel 3 and release the interlocking connection between the second flywheel body 7 and the first flywheel body 6 in response to relative rotational motion between the flywheel assembly 9 and the crank wheel 3. Accordingly, the locking arrangement 8 will produce an interlocking connection between the second flywheel body 7 and the first flywheel body 6 every time the engine rpm becomes zero and there is no cranking. Thus, cranking will always commence with the interlocking connection between the first and second flywheel bodies 6 and 7 in place. The locking arrangement 8 may comprise a retractable, radially from one of the flywheel bodies protruding, lock component, e.g. bolt, arranged selectively to engage a complementary locking part, such as a corresponding radial bore, in the other flywheel body, thus causing the first and second flywheel bodies 6 and 7 to rotate as one unit without any rotation relative to each other. Alternatively, the lock component may be a tooth, which is adapted to engage a tooth space. Still alternatively, any similar lock component and complementary locking part may be used for selectively achieving the interlocking connection between the second flywheel body 7 and the first flywheel body 6. In yet an alternative embodiment the locking arrangement 8 may comprise a friction clutch, arranged to selectively produce the interlocking connection between the second flywheel body 7 and the first flywheel body 6.

Upon the lock component being urged radially, e.g. against the force of a pre loaded spring, such that it disengages from the complementary locking part, rotation of the first and second flywheel bodies 6 and 7 relative to each other is allowed.

In one embodiment a release part 10 of the locking arrangement 8 is positioned at a side of the flywheel assembly 9 facing the crank wheel 3. The crank wheel 3 has a corresponding trigger element 11 adapted to interact mechanically with the release part 10, for activating a locking arrangement 8 release function as soon as the crank wheel 3 has a rotational speed lower than the rotational speed of the flywheel assembly 9. The locking arrangement 8 release function is arranged to urge the lock component, e.g. bolt or tooth, radially, such that it disengages from the complementary locking part, e.g. radial bore or tooth space, whereupon rotation of the first and second flywheel bodies 6 and 7 relative to each other is allowed. Alternatively, the locking arrangement 8 release function is arranged to disengage the friction clutch.

In an alternative embodiment, the crank wheel 3 may comprise one or more magnetic elements 11 arranged concentrically around the crankshaft 4. At least one release part 10 of the locking arrangement 8 is positioned at a side of the flywheel assembly 9 facing the magnetic elements 11 of the crank wheel 3. The at least one release part 10 comprises an induction coil, which will become energized once there is relative motion between the flywheel assembly 9 and the crank wheel 3. Relying on the thus induced electric power the locking arrangement 8 release function is arranged to electrically or electromagnetically urge the lock component, e.g. bolt or tooth, radially, such that it disengages from the complementary locking part, e.g. radial bore or tooth space, whereupon rotation of the first and second flywheel bodies 6 and 7 relative to each other is allowed. Alternatively, the locking arrangement 8 release function is arranged to disengage the friction clutch using electrical or electromagnetically operated release means. Correspondingly, as soon as there is no relative motion between the flywheel assembly 9 and the crank wheel 3, no induction will occur, and thus the lock component will once again, e.g. under the effect of a pre loaded spring, be brought to engage the complementary locking part.

In accordance with the present invention is also envisaged an automotive vehicle, which comprises a flywheel arrangement for an internal combustion engine as described above.

Furthermore, in accordance with the present invention is also envisaged a method for reducing the level of torsional vibrations produced in a flywheel arrangement for an internal combustion engine during engine start-up. The arrangement comprises a starter motor 1 having a pinion gear 2 at an output shaft. The pinion gear 2 is arranged in constant engagement with a corresponding crank gear of a crank wheel 3 located between an engine block and a flywheel assembly 9 of the engine. The crank wheel 3 is operatively connected to a crankshaft 4 of the engine via a one-way clutch unit 5. The method comprises the step of producing an interlocking connection between a first flywheel body 6 adapted to be connected to the crankshaft 4 of the engine and a second flywheel body 7 engaging the first flywheel body 6 and able to move elastically through a limited angular distance relative to the first flywheel body 6 during cranking of the internal combustion engine.

Modifications to embodiments of the invention described in the foregoing are possible without departing from the scope of the invention as defined by the accompanying claims.

Expressions such as "including", "comprising", "incorporating", "consisting of", "have", "is" used to describe and claim the present invention are intended to be construed in a non-exclusive manner, namely allowing for items, components or elements not explicitly described also to be present. Reference to the singular is also to be construed to relate to the plural and vice versa.

Numerals included within parentheses in the accompanying claims are intended to assist understanding of the claims and should not be construed in any way to limit subject matter claimed by these claims.

Thus, while there have been shown and described and pointed out fundamental novel features of the invention as applied to a preferred embodiment thereof, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. Flywheel arrangement for an internal combustion engine the arrangement comprising a starter motor (1) having a pinion gear (2) at an output shaft, which pinion gear (2) is arranged in constant engagement with a corresponding crank gear of a crank wheel (3) located between an engine block and a flywheel assembly (9) of the engine, which crank wheel (3) is operatively connected to a crankshaft (4) of the engine via a one-way dutch unit (5), where the flywheel assembly (9) comprises a first flywheel body (6) adapted to be connected to the crankshaft (4) of the engine, a second flywheel body (7) which is rotatable relative to the first flywheel body (6) and coupled thereto such that is able to move elastically through a limited angular distance relative to the first flywheel body (6), and an interlocking device including at least one locking arrangement (8) adapted to produce an interlocking connection between the second flywheel body (7) and the first flywheel body (6) during cranking of the internal combustion engine, **characterised in that** the at least one locking arrangement (8) is adapted to produce the interlocking connection between the second flywheel body (7) and the first flywheel body (6) when there is no relative rotational motion between the flywheel assembly (9) and the crank wheel (3) and release the interlocking connection between the second flywheel body (7) and the first flywheel body (6) in response to relative rotational motion between the flywheel assembly (9) and the crank wheel (3).

2. A flywheel arrangement according to claim 1, **characterised in that** the locking arrangement (8) comprises a retractable, radially from one of the flywheel bodies (6, 7) protruding, lock component arranged to selectively engage a complementary locking part in the other flywheel body (6, 7).

3. A flywheel arrangement according to claim 1, **characterised in that** the locking arrangement (8) comprises a friction clutch, arranged to selectively produce the interlocking connection between the second flywheel body (7) and the first flywheel body (6).

4. A flywheel arrangement according to any one of claims 1 to 3, **characterised in that** a release part (10) of the locking arrangement (8) is positioned at the side of the flywheel assembly (9) facing the crank wheel (3), which crank wheel (3) has a corresponding trigger element (11) adapted to interact with the release part (10) for activating a locking arrangement (8) release function as soon as the crank wheel (3) has a rotational speed lower than the rotational speed of the flywheel assembly (9).

5. A flywheel arrangement for internal combustion engine according to claim 2, **characterised in that** a release part (10) of the locking arrangement (8) is positioned at the side of the flywheel assembly (9) facing the crank wheel (3), which crank wheel (3) has a corresponding trigger element (11) adapted to interact mechanically with the release part (10) for activating a locking arrangement (8) release function, as soon as the crank wheel (3) has a rotational speed lower than the rotational speed of the flywheel assembly (9), through urging the lock component to disengage from the complementary locking part.

6. A flywheel arrangement according to claim 2, **characterised in that** the crank wheel (3) comprises one or more magnetic elements (11) arranged concentrically around the crankshaft (4), and at least one release part (10) of the locking arrangement (8) is positioned at a side of the flywheel assembly (9) facing the magnetic elements (11) of the crank wheel (3), which at least one release part (10) comprises an induction coil, arranged to be energized once there is relative motion between the flywheel assembly (9) and the crank wheel (3), inducing electric power for the locking arrangement (8) release function to electrically or electromagnetically urge the lock component to disengage from the complementary locking part.

7. A flywheel arrangement according to claim 3, **characterised in that** the crank wheel (3) comprises one or more magnetic elements (11) arranged concentrically around the crankshaft (4), and at least one release part (10) of the locking arrangement (8) is positioned at a side of the flywheel assembly (9) facing the magnetic elements (11) of the crank wheel (3), which at least one release part (10) comprises an induction coil, arranged to be energized once there is relative motion between the flywheel assembly (9) and the crank wheel (3), inducing electric power for the locking arrangement (8) release function to disengage the friction clutch using electrical or electromagnetically operated release means.

8. An automotive vehicle **characterised in that** it comprises a flywheel arrangement for an internal combustion engine according to any one of the preceding claims.

9. A method for reducing the level of torsional vibrations produced in a flywheel arrangement for an internal combustion engine during engine start-up where the arrangement comprises a starter motor (1) having a pinion gear (2) at an output shaft, which pinion gear (2) is arranged in constant engagement with a corresponding crank gear of a crank wheel (3) located between an engine block and a flywheel assembly (9) of the engine, which crank wheel (3) is operatively connected to a crankshaft (4) of the engine via a one-way clutch unit (5), **characterised in that** it comprises the step of producing an interlocking connection between a first flywheel body (6) adapted to be connected to the crankshaft (4) of the engine and a second flywheel body (7) engaging the first flywheel body (6) and able to move elastically through a limited angular distance relative to the first flywheel body (6) during cranking of the internal combustion engine, and an adapting at least one locking arrangement (8) to produce the interlocking connection between the second flywheel body (7) and the first flywheel body (b) when there is no relative rotational motion between the flywheel assembly (a) and the crank wheel (3) and release the interlocking connection between the second flywheel body (7) and the first flywheel body (6) in response to reletive rotational motion between the flywheel assembly (9) and the crank wheel (3).

## Patentansprüche

1. Schwungradanordnung für einen Verbrennungsmotor, wobei die Anordnung einen Anlasser (1) umfasst, der ein Zahnradgetriebe (2) an einer Abtriebswelle aufweist, wobei das Zahnradgetriebe (2) in ständigem Eingriff mit einem entsprechenden Kurbelgetriebe eines Kurbelrads (3), das sich zwischen einem Motorblock und einer Schwungradanordnung (9) des Motors befindet, angeordnet ist, wobei das Kurbelrad (3) über eine Freilaufkupplungseinheit (5) mit einer Kurbelwelle (4) des Motors wirkverbunden ist, wobei die Schwungradanordnung (9) einen ersten Schwungradkörper (6), der geeignet ist, mit der Kurbelwelle (4) des Motors verbunden zu werden, einen zweiten Schwungradkörper (7), der relativ zu dem ersten Schwungradkörper (6) drehbar und mit demselben derart gekoppelt ist, dass er in der Lage ist, sich relativ zu dem ersten Schwungradkörper (6) über einen begrenzten Winkelabstand elastisch zu bewegen, und eine Verriegelungsvorrichtung umfasst, die wenigstens eine Verriegelungsanordnung (8) enthält, die geeignet ist, beim Andrehen des Verbrennungsmotors eine Verriegelungsverbindung zwischen dem zweiten Schwungradkörper (7) und dem ersten Schwungradkörper (6) herzustellen, **dadurch gekennzeichnet, dass** die wenigstens eine Verriegelungsanordnung (8) geeignet ist, die Verriegelungsverbindung zwischen dem zweiten Schwungradkörper (7) und dem ersten Schwungradkörper (6) herzustellen, wenn zwischen der Schwungradanordnung (9) und dem Kurbelrad (3) keine relative Drehbewegung besteht, und die Verriegelungsverbindung zwischen dem zweiten Schwungradkörper (7) und dem ersten Schwungradkörper (6) in Reaktion auf eine relative Drehbewegung zwischen der Schwungradanordnung (9) und dem Kurbelrad (3) zu lösen.

2. Schwungradanordnung nach Anspruch 1, **dadurch gekennzeichnet, dass** die Verriegelungsanordnung (8) eine einziehbare, radial von einem der Schwungradkörper (6, 7) vorstehende Verriegelungskomponente umfasst, die so angeordnet ist, dass sie gezielt mit einem komplementären Verriegelungsteil in dem anderen Schwungradkörper (6, 7) eingreift.

3. Schwungradanordnung nach Anspruch 1, **dadurch gekennzeichnet, dass** die Verriegelungsanordnung (8) eine Reibkupplung umfasst, die so angeordnet ist, dass sie die Verriegelungsverbindung zwischen dem zweiten Schwungradkörper (7) und dem ersten Schwungradkörper (6) gezielt herstellt.

4. Schwungradanordnung nach einem der Ansprüche 1 bis 3, **dadurch gekennzeichnet, dass** ein Löseteil (10) der Verriegelungsanordnung (8) auf der dem Kurbelrad (3) zugewandten Seite der Schwungradanordnung (9) positioniert ist, wobei das Kurbelrad (3) ein entsprechendes Auslöseelement (11) aufweist, das geeignet ist, mit dem Löseteil (10) zusammenzuwirken, um eine Funktion zum Lösen der Verriegelungsanordnung (8) zu aktivieren, sobald das Kurbelrad (3) eine Drehgeschwindigkeit aufweist, die niedriger als die Drehgeschwindigkeit der Schwungradanordnung (9) ist.

5. Schwungradanordnung für einen Verbrennungsmotor nach Anspruch 2, **dadurch gekennzeichnet, dass** ein Löseteil (10) der Verriegelungsanordnung (8) auf der dem Kurbelrad (3) zugewandten Seite der Schwungradanordnung (9) positioniert ist, wobei das Kurbelrad (3) ein entsprechenden Auslöseelement (11) aufweist, das geeignet ist, mechanisch mit dem Löseteil (10) zusammenzuwirken, um eine Funktion zum Lösen der Verriegelungsanordnung (8) zu aktivieren, sobald das Kurbelrad (3) eine Drehgeschwindigkeit aufweist, die niedriger als die Drehgeschwindigkeit der Schwungradanordnung (9) ist, indem es die Verriegelungskomponente veranlasst, außer Eingriff mit dem komplementären Verriegelungsteil zu kommen.

6. Schwungradanordnung nach Anspruch 2, **dadurch gekennzeichnet, dass** das Kurbelrad (3) ein oder mehrere Magnetelemente (11) umfasst, die konzentrisch um die Kurbelwelle (4) herum angeordnet sind, und wenigstens ein Löseteil (10) der Verriegelungsanordnung (8) auf einer den Magnetelementen (11) des Kurbelrads (3) zugewandten Seite der Schwungradanordnung (9) positioniert ist, wobei das wenigstens eine Löseteil (10) eine Induktionsspule umfasst, die so angeordnet ist, dass sie erregt wird, sobald zwischen der Schwungradanordnung (9) und dem Kurbelrad (3) eine relative Bewegung besteht, wodurch elektrische Energie für die Funktion zum Lösen der Verriegelungsanordnung (8) erzeugt wird, um die Verriegelungskomponente elektrisch oder elektromagnetisch zu veranlassen, außer Eingriff mit dem komplementären Verriegelungsteil zu kommen.

7. Schwungradanordnung nach Anspruch 3, **dadurch gekennzeichnet, dass** das Kurbelrad (3) ein oder mehrere Magnetelemente (11) umfasst, die konzentrisch um die Kurbelwelle (4) herum angeordnet sind, und wenigstens ein Löseteil (10) der Verriegelungsanordnung (8) auf einer den Magnetelementen (11) des Kurbelrads (3) zugewandten Seite der Schwungradanordnung (9) positioniert ist, wobei das wenigstens eine Löseteil (10) eine Induktionsspule umfasst, die so angeordnet ist, dass sie erregt wird, sobald zwischen der Schwungradanordnung (9) und dem Kurbelrad (3) eine relative Bewegung besteht, wodurch elektrische Energie für die Funktion zum Lösen der Verriegelungsanordnung (8) erzeugt wird, um unter Verwendung von elektrisch oder elektromagnetisch betriebenen Lösemitteln die Reibkupplung außer Eingriff zu bringen.

8. Kraftfahrzeug, **dadurch gekennzeichnet, dass** es eine Schwungradanordnung für einen Verbrennungsmotor nach einem der vorhergehenden Ansprüche umfasst.

9. Verfahren zum Reduzieren des Grads an Drehschwingungen, die beim Anlaufen des Motors in einer Schwungradanordnung für einen Verbrennungsmotor erzeugt werden, wobei die Anordnung einen Anlasser (1) umfasst, der ein Zahnradgetriebe (2) an einer Abtriebswelle aufweist, wobei das Zahnradgetriebe (2) in ständigem Eingriff mit einem entsprechenden Kurbelgetriebe eines Kurbelrads (3), das sich zwischen einem Motorblock und einer Schwungradanordnung (9) des Motors befindet, angeordnet ist, wobei das Kurbelrad (3) über eine Freilaufkupplungseinheit (5) mit einer Kurbelwelle (4) des Motors wirkverbunden ist, **dadurch gekennzeichnet, dass** es den Schritt des Herstellens einer Verriegelungsverbindung zwischen einem ersten Schwungradkörper (6), der geeignet ist, mit der Kurbelwelle (4) des Motors verbunden zu werden, und einem zweiten Schwungradkörper (7) umfasst, der mit dem ersten Schwungradkörper (6) in Eingriff steht und in der Lage ist, sich beim Andrehen des Verbrennungsmotors relativ zu dem ersten Schwungradkörper (6) über einen begrenzten Winkelabstand elastisch zu bewegen, und des Anpassens wenigstens einer Verriegelungsanordnung (8), um die Verriegelungsverbindung zwischen dem zweiten Schwungradkörper (7) und dem ersten Schwungradkörper (6) herzustellen, wenn zwischen der Schwungradanordnung (9) und dem Kurbelrad (3) keine relative Drehbewegung besteht, und die Verriegelungsverbindung zwischen dem zweiten Schwungradkörper (7) und dem ersten Schwungradkörper (6) in Reaktion auf eine relative Drehbewegung zwischen der Schwungradanordnung (9) und dem Kurbelrad (3) zu lösen.

## Revendications

1. Agencement de volant d'inertie pour un moteur à combustion interne, l'agencement comprenant un démarreur (1) ayant un pignon d'engrenage (2) au niveau d'un arbre de sortie, lequel pignon d'engrenage (2) est disposé en engagement permanent avec une couronne dentée correspondante d'une roue de vilebrequin (3) située entre un bloc moteur et un ensemble de volant d'inertie (9) du moteur, laquelle roue de vilebrequin (3) est reliée fonctionnellement à un vilebrequin (4) du moteur par le biais d'une unité d'embrayage unidirectionnel (5), l'ensemble de volant d'inertie (9) comprenant un premier corps de volant d'inertie (6) prévu pour être relié au vilebrequin (4) du moteur, un deuxième corps de volant d'inertie (7) qui peut tourner par rapport au premier corps de volant d'inertie (6) et qui est accouplé à celui-ci de manière à pouvoir se déplacer élastiquement sur une distance angulaire limitée par rapport au premier corps de volant d'inertie (6), et un dispositif d'emboîtement comportant au moins un agencement de verrouillage (8) prévu pour produire une connexion d'emboîtement entre le deuxième corps de volant d'inertie (7) et le premier corps de volant d'inertie (6) lors du démarrage du moteur à combustion interne, **caractérisé en ce que** l'au moins un agencement de verrouillage (8) est prévu pour produire la connexion d'emboîtement entre le deuxième corps de volant d'inertie (7) et le premier corps de volant d'inertie (6) lorsqu'il n'existe aucun mouvement de rotation entre l'ensemble de volant d'inertie (9) et la roue de vilebrequin (3) et pour libérer la connexion d'emboîtement entre le deuxième corps de volant d'inertie (7) et le premier corps de volant d'inertie (6) en réponse à un mouvement de rotation relatif entre l'ensemble de volant d'inertie (9) et la roue de vilebrequin (3).

2. Agencement de volant d'inertie selon la revendication 1, **caractérisé en ce que** l'agencement de verrouillage (8) comprend un composant de verrou rétractable, faisant saillie radialement depuis l'un des corps de volant d'inertie (6, 7), prévu pour venir en prise de manière sélective avec une partie de verrouillage complémentaire dans l'autre corps de volant d'inertie (6, 7).

3. Agencement de volant d'inertie selon la revendication 1, **caractérisé en ce que** l'agencement de verrouillage (8) comprend un embrayage à friction prévu pour produire de manière sélective la connexion d'emboîtement entre le deuxième corps de volant d'inertie (7) et le premier corps de volant d'inertie (6).

4. Agencement de volant d'inertie selon l'une quelconque des revendications 1 à 3, **caractérisé en ce qu'**une partie de libération (10) de l'agencement de verrouillage (8) est positionnée du côté de l'ensemble de volant d'inertie (9) faisant face à la roue de vilebrequin (3), ladite roue de vilebrequin (3) présentant un élément de déclenchement correspondant (11) prévu pour coopérer avec la partie de libération (10) de manière à activer une fonction de libération de l'agencement de verrouillage (8) dès que la roue de vilebrequin (3) a une vitesse de rotation inférieure à la vitesse de rotation de l'ensemble de volant d'inertie (9).

5. Agencement de volant d'inertie pour un moteur à combustion interne selon la revendication 2, **caractérisé en ce qu'**une partie de libération (10) de l'agencement de verrouillage (8) est positionnée du côté de l'ensemble de volant d'inertie (9) faisant face à la roue de vilebrequin (3), ladite roue de vilebrequin (3) présentant un élément de déclenchement correspondant (11) prévu pour coopérer mécaniquement avec la partie de libération (10) pour activer une fonction de libération de l'agencement de verrouillage (8) dès que la roue de vilebrequin (3) a une vitesse de rotation inférieure à la vitesse de rotation de l'ensemble de volant d'inertie (9), en sollicitant le composant de verrou de manière à ce qu'il se désengage de la partie de verrouillage complémentaire.

6. Agencement de volant d'inertie selon la revendication 2, **caractérisé en ce que** la roue de vilebrequin (3) comprend un ou plusieurs éléments magnétiques (11) disposés concentriquement autour du vilebrequin (4), et au moins une partie de libération (10) de l'agencement de verrouillage (8) est positionnée d'un côté de l'ensemble de volant d'inertie (9) faisant face aux éléments magnétiques (11) de la roue de vilebrequin (3), ladite au moins une partie de libération (10) comprenant une bobine d'induction, prévue pour être excitée dès qu'il se produit un mouvement relatif entre l'ensemble de volant d'inertie (9) et la roue de vilebrequin (3), induisant une puissance électrique pour la fonction de libération de l'agencement de verrouillage (8) pour solliciter électriquement ou électromagnétiquement le composant de verrou de manière à ce qu'il se désengage de la partie de verrouillage complémentaire.

7. Agencement de volant d'inertie selon la revendication 3, **caractérisé en ce que** la roue de vilebrequin (3) comprend un ou plusieurs éléments magnétiques (11) disposés concentriquement autour du vilebrequin (4), et au moins une partie de libération (10) de l'agencement de verrouillage (8) est positionnée d'un côté de l'ensemble de volant d'inertie (9) faisant face aux éléments magnétiques (11) de la roue de vilebrequin (3), ladite au moins une partie de libération (10) comprenant une bobine d'induction prévue pour être excitée dès qu'il se produit un mouvement relatif entre l'ensemble de volant d'inertie (9) et la roue de vilebrequin (3), induisant une puissance électrique pour la fonction de libération l'agencement de verrouillage (8) de afin de désengager l'embrayage à friction en utilisant un moyen de libération à commande électrique ou électromagnétique.

8. Véhicule automobile, **caractérisé en ce qu'**il comprend un agencement de volant d'inertie pour un moteur à combustion interne selon l'une quelconque des revendications précédentes.

9. Procédé pour réduire le niveau de vibrations torsionnelles produites dans un agencement de volant d'inertie pour un moteur à combustion interne au cours du démarrage du moteur, dans lequel l'agencement comprend un démarreur (1) ayant un pignon d'engrenage (2) au niveau d'un arbre de sortie, lequel pignon d'engrenage (2) est disposé en engagement permanent avec une couronne dentée correspondante d'une roue de vilebrequin (3) située entre un bloc moteur et un ensemble de volant d'inertie (9) du moteur, laquelle roue de vilebrequin (3) est reliée fonctionnellement à un vilebrequin (4) du moteur par le biais d'une unité d'embrayage unidirectionnel (5), **caractérisé en ce qu'**il comprend l'étape consistant à produire une connexion d'emboîtement entre un premier corps de volant d'inertie (6) prévu pour être connecté au vilebrequin (4) du moteur et un deuxième corps de volant d'inertie (7) venant en prise avec le premier corps de volant d'inertie (6) et capable de se déplacer élastiquement sur une distance angulaire limitée par rapport au premier corps de volant d'inertie (6) au cours du démarrage du moteur à combustion interne, et
à adapter au moins un agencement de verrouillage (8) pour produire la connexion d'emboîtement entre le deuxième corps de volant d'inertie (7) et le premier corps de volant d'inertie (6) lorsqu'il n'existe aucun mouvement de rotation entre l'ensemble de volant d'inertie (9) et la roue de vilebrequin (3) et pour libérer la connexion d'emboîtement entre le deuxième corps de volant d'inertie (7) et le premier corps de volant d'inertie (6) en réponse à un mouvement de rotation relatif entre l'ensemble de volant d'inertie (9) et la roue de vilebrequin (3).
